(19) Europäisches Patentamt

European Patent Office

Office européen des brevets

(11) **EP 0 766 709 B1**

(12) **EUROPÄISCHE PATENTSCHRIFT**

(45) Veröffentlichungstag und Bekanntmachung des Hinweises auf die Patenterteilung:
**29.08.2001   Patentblatt 2001/35**

(51) Int Cl.7: **C08J 5/18**, B29C 47/88, B29C 47/00

(21) Anmeldenummer: **95921720.9**

(22) Anmeldetag: **19.06.1995**

(86) Internationale Anmeldenummer:
**PCT/DE95/00811**

(87) Internationale Veröffentlichungsnummer:
**WO 95/35340 (28.12.1995 Gazette 1995/55)**

(54) **VERFAHREN ZUR HERSTELLUNG ORIENTIERTER CELLULOSEFOLIEN**

PROCESS OF MANUFACTURING ORIENTATED CELLULOSE FILMS

PROCEDE DE PREPARATION DES FEUILLES EN CELLULOSE ORIENTEES

(84) Benannte Vertragsstaaten:
**AT BE DE ES FR GB IT NL SE**

(30) Priorität: **20.06.1994   DE 4421482**

(43) Veröffentlichungstag der Anmeldung:
**09.04.1997   Patentblatt 1997/15**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **WEIGEL, Peter**
**D-14532 Kleinmachnow (DE)**

• **FINK, Hans-Peter**
**D-14513 Teltow (DE)**
• **FRIGGE, Konrad**
**D-14478 Potsdam (DE)**
• **SCHWARZ, Wolfgang**
**D-14532 Kleinmachnow (DE)**

(56) Entgegenhaltungen:
| | |
|---|---|
| EP-A- 0 494 851 | EP-A- 0 574 870 |
| EP-A- 0 662 283 | WO-A-93/13670 |
| WO-A-93/19230 | WO-A-95/07811 |
| US-A- 4 416 698 | |

## Beschreibung

Die Erfindung betrifft ein Verfahren zur Herstellung orientierter Cellulosefolien durch Extrusion einer Celluloselösung in ein Fällbad.

Weltweit werden gegenwärtig erhebliche Mengen an Produkten aus Regeneratcellulose, wie Fasern, Folien und anderen Formkörpern, vorwiegend nach dem Viskoseverfahren hergestellt. Das Viskoseverfahren ist jedoch wergen der hohen Umweltbelastung und der mit dem Verfahren verbundenen hohen Investitionskosten nachteilig.

Ausgehend hiervon, gibt es vielfältige Bemühungen, alternative Verfahren vorzuschlagen. Hinsichtlich der Erzeugung von Cellulosefasern ist ein aussichtsreiches Verfahren das Verspinnen von Lösungen der Cellulose in Aminoxiden. Aus der DE 28 30 685 sowie der DD 142 898 und der US 3,767,756 ist es bekannt, daß Cellulose in einem N-Methyl-Morpholin-N-Oxid(NMMNO)-Wasser-System löslich ist und durch Spinnen in eine meist wäßrige NMMNO-Lösung zu textilen Fasern verarbeitet werden kann. Weiter ist aus der DD 201 703 die Zusammensetzung von Lösungen und Fällbad bekannt. In der vorstehend erwähnten Druckschrift ist auch offenbart, daß dem Fällbad Zusatzstoffe zugegeben werden können zugegeben werden können.

Die Herstellung von Celluloseblasfolien aus NMMNO-Lösungen ist jedoch aus dem Stand der Technik bisher nicht bekannt geworden.

Aus der EP 0 494 851 A2 ist ein Verfahren zur Herstellung eines cellulosischen Formkörpers bekannt, bei welchem eine cellulosische Aminoxidlösung durch eine Düse oder einen Spalt gepreßt, anschließend durch einen Luftspalt geführt und schließlich in einem Füllbad koaguliert wird, ohne daß im Luftspalt verstreckt wird.

Aus der EP 0 574 870 A1 ist ein Verfahren zur Herstellung von Cellulose-Formkörpern wie Schlauchfolien durch Extrudieren einer Cellulose enthaltenden Lösung durch ein Formwerkzeug in ein die Cellulose nicht ausfällendes Medium, Orientieren der Cellulosemoleküle durch Verzug des extrudierten Lösungsstrahls in diesem Medium und Ausfällen der Cellulose aus dem Lösungsstrahl.

Aus der EP-A-0 662 283 ist ein Blasverfahren bekannt, bei dem die Ausweisung des Schlauches über einen Dorn erfolgt.

Ausgehend von diesem Stand der Technik, ist es die Aufgabe der vorliegenden Erfindung, ein Verfahren zur Herstellung von Celluloseblasfolien anzugeben, wobei insbesondere die mechanischen Eigenschaften der Folien einstellbar sein sollen.

Die Aufgabe wird erfindungsgemäß durch die kennzeichnenden Merkmale des Anspruchs 1, gelöst. Die Unteransprüche zeigen vorteilhafte Weiterbildungen auf.

Überraschenderweise konnte die Anmelderin erstmalig zeigen, daß es möglich ist, Celluloseblasfolien ohne Dorn zu erhalten, wenn in Aminoxid gelöste Cellulose über eine Filmblasdüse und einen äußeren Luftspalt nach unten in ein Fällungsbad extrudiert wird. Das erfindungsgemäße Verfahren zeichnet sich insbesondere dadurch aus, daß es durch Variation der Verfahrensparameter möglich ist, verschieden orientierte Blasfolien herzustellen. Zum einen können durch Variation von Abzugs- und Aufblasverhältnis die Längs- und Querreckverhältnisse eingestellt werden. Das Abzug- und Aufblasverhältnis kann dabei im Bereich von 1 bis 10 variiert werden. Die damit hergestellten Folien weisen dann entweder eine uniplanar-axiale, biaxiale oder uniplanar-biaxiale Orientierung auf. Besonders überraschend und nicht vorhersehbar ist, daß die Cellulosefolien auch eine uniplanar-biaxiale Orientierung aufweisen können, wobei die (101)-Netzebenenschar (Meyer/Misch-Nomenklatur) zur Folienoberfläche und die Kettenachsen in unterschiedlichem Maße, vorzugsweise in Folienlaufrichtung und quer dazu, orientiert voliegen. Das erfindungsgemäße Verfahren zeichnet sich weiter dadurch aus, daß eine zusätzliche Steuerung der mechanischen Eigenschaften auch über die Variation des äußeren Luftspaltes möglich ist. Der äußere Luftspalt kann dabei im Bereich von 1 bis 50 mm variiert werden.

Es hat sich in Versuchen gezeigt, daß bei einem Verzug von maximal 5 und einem Aufblasverhältnis von 1 vorzugsweise schwach orientierte, uniplanar-axiale Strukturen entstehen.

Wenn der Luftspalt auf größer als 5 mm eingestellt wird, werden uniplanar-biaxial orientierte Folien erhalten, deren Orientierungsgrad durch Erhöhung des Abzugs- und Querreckverhältnisses vergrößert werden kann.

Das erfindungsgemäße Verfahren zeichnet sich demnach besonders dadurch aus, daß die mechanischen Eigenschaften der herstellbaren Blasfolien sowohl durch Variation von Längs- und Querreckung im Luftspalt und zusätzlich durch Variation der Länge des Luftspaltes verändert werden kann. Dadurch ist eine gezielte Beeinflussung der mechanischen Eigenschaften der herstellbaren Folien möglich, wobei sowohl isotrope als auch anisotrope Folien, d.h. Folien mit unterschiedlichen mechanischen Eigenschaftsparameter in Quer- und Längsrichtung herstellbar sind.

Das bei der Blasfolienherstellung übliche Aufblasen des Folienschlauches mit Luft, wie es z.B. in der DE 38 15 415 beschrieben ist, ist überraschenderweise auch bei der Herstellung von Blasfolien aus von in Aminoxiden gelöster Cellulose möglich.

Eine andere Ausführungsform der Erfindung schlägt vor, daß das Aufblasen des Folienschlauches nicht mit Luft erfolgt sondern mit der Fällbadflüssigkeit. Erfindungsgemäß ist bei dieser Ausgestaltung des Verfahrens dafür zu sorgen, daß auch innerhalb des Folienschlauches ein innerer Luftspalt zwischen Filmblasdüse und Fällbad vorhanden ist. Dieser innere Luftspalt ist dabei im Bereich von 0,1 bis 50 mm variierbar. Dies ermöglicht eine weitere zusätzliche Einflußnahme auf den Ablauf der Koagulation, indem man unterschiedliche Luftspaltlängen innerhalb und außerhalb des Folienschlauches einstellen kann. Bevorzugt wird der innere Luftspalt auf 0,1 bis 30 mm eingestellt.

Dieses Verfahren verhindert sogleich auch das Verkleben der Folien beim Zusammenlegen, das dann leicht möglich ist, wenn lediglich Luft in den Folienschlauch eingeleitet wird. Die Länge des Luftspaltes und der zur Einstellung des Querreckverhältnisses notwendige Druck kann durch die eingefüllte Flüssigkeitsmenge und den Druck im Luftspalt reguliert werden. Damit ist die Einstellung von unterschiedlichen biaxial orientierten Strukturen direkt steuerbar.

Eine weitere Einflußnahme auf das Koagulationsverhalten kann dadurch hergestellt werden, daß unterschiedliche Fällbäder (unterschiedliche Konzentration des NMMNO, Zusätze wie Isopropanol, Aminopropanol, Harnstoff, Caprolactam u.a.) innerhalb und außerhalb des Folienschlauches verwendet werden.

Zusätze zu Fällungsbädern sind auch in der DD 201 703 offenbart. Die Erfindung schließt alle diese Zusätze mit ein. Durch den dadurch verursachten unterschiedlichen Ablauf der Koagulation an der Innen- und Außenseite der Folie ist so auch die Herstellung asymmetrischer Folien möglich.

Bevorzugt wird das vorstehend beschriebene erfindungsgemäße Verfahren mit einer nach unten gerichteten Ringdüse als Filmblasdüse ausgeführt. Die Ringdüse kann daher einen Durchmesser von 10 bis 200 mm aufweisen. Es wird eine in N-Methyl-Morpholin-N-Oxid (NMMNO) gelöste nicht derivatisierte Cellulose verwendet.

Die Folien die mit dem Verfahren hergestellt werden sind, zeichnen sich insbesondere dadurch aus, daß sie eine Festigkeit im Bereich von 100 bis 600 Mpa aufweisen. Wie bereits. vorstehend ausgeführt, ist ein besonderer Vorzug der erfindungsgemäß hergestellten Folien, daß ihre Orientierung uniplanar-axial, biaxial oder uniplanar biaxial einstellbar ist.

Der Folien die mit dem erfindungsgemaßen Verfahren hergestellt werden eigen sich besonders als biologisch abbaubares und kompostierbares Material mit einem breiten Einsatzbereich, z.B. als Verpackungsmaterial.

Die Erfindung wird nachstehend anhand von drei Ausführungsbeispielen näher erläutert.

Beipiele:

1. Eine Lösung von 9,5% Cellulose in NMMNO-Monohydrat mit 0,1 Masse-%, bezogen auf Cellulose Propylgallat als Stabilisierungsmittel, wurde mit einem Laborextruder durch eine Filmblasdüse mit einem Durchmesser von 25 mm bei einer Temperatur von 90° C nach unten extrudiert über einen äußeren Luftspalt von 3 mm Breite mit einem Verzug von 1 : 5 und einem Querreckverhältnis von 1 : 1 in ein Fällbad, bestehend aus einer 10%-igen wäßrigen NMMNO-Lösung. Das Innere des entstehenden Folienschlauches ist vollständig mit der gleichen Fällbadflüssigkeit gefüllt. Der Folienschlauch wird noch im Fällbad zusammengelegt, über eine Umlenkrolle nach oben aus dem Fällbad herausgeführt, gewaschen und getrocknet. Die entstehende Folie besitzt die folgenden Parameter:

| | |
|---|---|
| Foliendicke | 65 µm |
| Festigkeit, längs | 198 Mpa |
| quer | 96 Mpa |
| Reißdehnung, längs | 14 % |
| quer | 34 % |
| E-Modul, längs | 7200 Mpa |
| quer | 1360 Mpa |

Röntgenographisch ermittelte Parameter der Orientierung: siehe Tabelle 1

2. Wie Beispiel 1 mit einem äußeren Luftspalt von 5 mm Breite und einem Luftspalt im Inneren des Folienschlauches von 8 mm Breite.

Die entstehende Folie besitzt die folgenden Parameter:

| | |
|---|---|
| Foliendicke | 58 µm |
| Festigkeit, längs | 258 Mpa |
| quer | 110 Mpa |
| Reißdehnung, längs | 12 % |
| quer | 28 % |
| E-Modul, längs | 7800 Mpa |
| quer | 1780 Mpa |

Röntgenographisch ermittelte Parameter der Orientierung: siehe Tabelle 1

3. Wie Beispiel 1 mit einem Verzug in Längsrichtung von 1 : 5 und einem Aufblasverhältnis von 1 : 2,5. Die entstehende Folie besitzt die folgenden Parameter:

| Foliendicke | 25 µm |
|---|---|
| Festigkeit, längs | 330 Mpa |
| quer | 190 Mpa |
| Reißdehnung, längs | 10 % |
| quer | 18 % |
| E-Modul, längs | 12360 Mpa |
| quer | 3080 Mpa |

Röntgenographisch ermittelte Parameter der Orientierung: siehe Tabelle 1

Tabelle 1

| Bestimmung der Orientierung aus Röntgenweitwinkel-Filmaufnahmen in senkrechter Transmission | | | | | |
|---|---|---|---|---|---|
| Beispiel | Orientierungstyp | Reflexe /Aufnahmegeometrie | | | |
| | | (101) / b | (101) / c | (101) / a | (10$\bar{1}$) / b |
| 1. | uniplanar-arial | g | g | g | sg |
| 2. | uniplanar-biaxial | h | g | m | g |
| 3. | ausgeprägt uniplanar-biarial | sh | m | h | m |

Aufnahmegeometrie:

a. senkrecht zur Folienoberfläche
b. parallel zur Folienoberfläche, senkrecht zur Laufrichtung
c. parallel zur Folienoberfläche, parallel zur Laufrichtung

Bewertung der azimutalen Reflexschärfe als relatives Maß der Orientierung:

sg - sehr gering, nahezu ringförmiger Reflex
g - gering
m - mittel
h - hoch
sh - sehr hoch

**Patentansprüche**

**1.** Verfahren zur Herstellung orientierter Cellulosefolien durch Verspinnen von in Aminoxiden gelöster nicht derivatisierter Cellulose über eine Ringdüse als Filmblasduse in ein Fällungsbad,
**dadurch gekennzeichnet**,
daß die Cellulose-Lösung über die Ringdüse und einen äußeren Luftspalt nach unten in das Fällungsbad extrudiert wird, wobei ein Aufblasen des Folienschlauches ohne Dorn mit einem Treibgas erfolgt, wobei
durch Variation des Verzuges im Bereich von 1 bis 10 und des Aufblasverhältnisses im Bereich von 1 bis 10 eine uniplanar-axiale, biaxiale - oder uniplanar-biaxiale Orientierung der Folie eingestellt wird.

**2.** Verfahren nach Anspruch 1,
**dadurch gekennzeichnet**, daß durch Variation der Länge des äußeren Luftspaltes im Bereich von 1 bis 50 mm eine uniplanar-axiale, biaxiale oder uniplanar-biaxiale Orientierung der Folie eingestellt wird.

**3.** Verfahren nach Anspruch 1 oder 2,
**dadurch gekennzeichnet**, daß das Aufblasen des Folienschlauches mit Luft erfolgt.

**4.** Verfahren nach Anspruch 1 oder 2,
**dadurch gekennzeichnet**, daß das Aufblasen des Folienschlauches mit einer in das Innere des Folienschlauchs eingeführten Flüssigkeit stabilisiert wird, wobei zwischen der Oberfläche der Flüssigkeit und der Ringduse ein innerer Luftspalt vorgesehen ist und das Aufblasen der Schlauchfolie durch den Druck der in dem Luftschlauch eingeschlossenen Luft erfolgt.

**5.** Verfahren nach Anspruch 4,
**dadurch gekennzeichnet**, daß durch Variation der Länge des inneren Luftspaltes im Bereich von 0,1 bis 50 mm in der Schlauchfolie der Ablauf der Koagulation eingestellt wird.

**6.** Verfahren nach mindestens einem der Ansprüche 1 bis 5,
**dadurch gekennzeichnet**, daß als Fällungsbad Wasser oder eine wäßrige Lösung von N-Methyl-Morpholin-N-Oxid (NMMNO) verwendet wird.

**7.** Verfahren nach mindestens einem der Ansprüche 1 bis 6,
**dadurch gekennzeichnet**, daß durch Zugabe von organischen oder anorganischen Stoffen eine Änderung der Zusammensetzung der Fällbadflüssigkeit innerhalb und/oder außerhalb der Schlauchfolie herbeigeführt wird, so daß die Struktur der Folie beeinflußt wird.

**8.** Verfahren nach mindestens einem der Ansprüche 1 bis 7,
**dadurch gekennzeichnet**, daß durch unterschiedliche Zusammensetzung der Fällbäder, die sich innerhalb und außerhalb der Schlauchfolie befinden, eine Asymmetrie der Folie herstellbar ist.


**Claims**

**1.** Method for producing orientated cellulose films by spinning non-derivated cellulose dissolved in amine oxides via an annular nozzle as a film blow nozzle into a regenerating bath,
***characterised in that***
the cellulose solution is extruded via the annular nozzle and an external air gap downwards into the regenerating bath, inflation of the film tube being effected by a blowing gas, without a mandrel,
a uniplanar-axial, biaxial or uniplanar-biaxial orientation of the film being set by varying the stretch in the range of 1 to 10 and the inflation ratio in the range of 1 to 10.

**2.** Method according to claim 1,
**characterised in that**, by varying the length of the external air gap in the range of 1 to 50 mm, a uniplanar-axial, biaxial or uniplanar-biaxial orientation of the film is set.

**3.** Method according to claim 1 or 2,
**characterised in that** inflation of the film tube is effected with air.

**4.** Method according to claim 1 or 2,
**characterised in that** inflation of the film tube is stabilised with a liquid which is introduced into the interior of the film tube, an internal air gap being provided between the surface of the liquid and the annular nozzle and inflation of the tubular film being effected by the pressure of the air enclosed in the air tube.

**5.** Method according to claim 4,
**characterised in that** the course of the coagulation is set by varying the length of the internal air gap in the range of 0.1 to 50 mm in the tubular film.

**6.** Method according to at least one of the claims 1 to 5,
**characterised in that** water or an aqueous solution of N-methyl-morpholine-N-oxide (NMMNO) is used as the regenerating bath.

**7.** Method according to at least one of the claims 1 to 6,

**characterised in that** a change in the composition of the regenerating bath liquid internally and/or externally of the tubular film is produced by adding organic or inorganic substances so that the structure of the film is affected.

8.  Method according to at least one of the claims 1 to 7,
    **characterised in that** asymmetry of the film can be produced by differing composition of the regenerating baths which are located internally and externally of the tubular film.


**Revendications**

1.  Procédé de production de feuilles de cellulose orientées par filage de cellulose non transformée en dérivés, dissoute dans des oxydes d'amine. par une tuyère annulaire en forme de buse de soufflage de pellicule dans un bain de précipitation,
    **caractérisé en ce qu'**
    on extrude la solution de cellulose par la tuyère annulaire et une fente d'aération dirigée vers le bas dans le bain de précipitation, avec soufflage du tuyau constitué par la feuille sans broche avec un gaz vecteur, opération dans laquelle en faisant varier l'étirage dans un Intervalle allant de 1 à 10 et le rapport de soufflage dans un rapport allant de 1 à 10, on établit une orientation uniplanaire-axiale, biaxiale ou uniplanaire-biaxiale de la feuille.

2.  Procédé selon la revendication 1,
    **caractérisé en ce qu'**
    en faisant varier la longueur de la fente d'aération extérieure dans un intervalle de 1 à 50 mm, on établit une orientation uniplanaire-axiale, biaxiale ou uniplanaire-biaxiale de la feuille.

3.  Procédé selon la revendication 1 ou 2.
    **caractérisé en ce que**
    on procède au soufflage du tuyau constitué par la feuille avec de l'air.

4.  Procédé selon la revendication 1 ou 2.
    **caractérisé en ce que**
    le soufflage du tuyau constitué par la feuille est stabilisé avec un liquide introduit dans l'intérieur du tuyau constitué par la feuille, opération dans laquelle est prévue entre la surface du liquide et la tuyère annulaire une fente d'aération interne, et le soufflage de la feuille constituant le tuyau s'effectue par la pression de l'air inclus dans le tube d'air.

5.  Procédé selon la revendication 4,
    **caractérisé en ce que**
    en faisant varier la longueur de la fente d'aération interne dans un intervalle allant de 0,1 à 50 mm dans la feuille constituant le tube on règle le déroulement de la coagulation.

6.  Procédé selon au moins l'une des revendications 1 à 5,
    **caractérisé en ce qu'**
    on utilise comme bain de précipitation de l'eau ou une solution aqueuse de N-oxyde de N-méthyl morpholine (NMMNO).

7.  Procédé selon au moins l'une des revendications 1 à 6,
    **caractérisé en ce qu'**
    en ajoutant des matériaux organiques ou inorganiques on produit une modification de la composition du liquide du bain de précipitation à l'intérieur et/ou à l'extérieur de la feuille constituant le tube, de manière à influer sur la structure de la feuille.

8.  Procédé selon au moins l'une des revendications 1 à 7,
    **caractérisé en ce qu'**
    en faisant varier la composition des bains de précipitation qui se trouvent à l'intérieur et à l'extérieur de la feuille constituant le tube, on peut établir une asymétrie de la feuille.